# EUROPEAN PATENT APPLICATION

(11) **EP 3 023 886 A1**
(43) Date of publication of application: **25.05.2016**
(21) Application number: 14193757.3
(22) Date of filing: 18.11.2014
(51) Int. Cl.: G06F 17/30

(54) **Method, controller, program, and data storage system for performing reconciliation processing**

(71) Applicant: FUJITSU LIMITED, Kawasaki-shi, Kanagawa 211-8588 (JP)
(72) Inventor: Hu, Bo, Winchester, Hampshire SO22 5EG (GB); Naseer Butt, Aisha, Hayes, Middlesex UB4 8LB (GB); Menday, Roger, Guildford, Surrey GU1 2HH (GB)
(74) Representative: Hutchison, James

(57) **Abstract**

Embodiments include a method for reconciling a source data graph with a target data graph, the source data graph and the target data graph each comprising: a plurality of vertices; and a plurality of interconnections, the plurality of interconnections each connecting two vertices from among the plurality of vertices and representing a relationship between the connected vertices. The method comprises: generating target event propagation information representing the propagation pattern of one or more executions of each of a set of processing events in the target data graph; receiving a request to reconcile the source data graph with the target data graph, and in response to the request, triggering one or more executions of each of the set of processing events in the source data graph; generating source event propagation information representing the propagation pattern of each of the executions of processing events triggered in the source data graph; and using the target event propagation information and the source event propagation information to assess the similarity of pairs of vertices comprising one vertex from each of the source data graph and the target data graph.

## Description

The present invention lies in the field of data storage and the associated processing. Specifically, embodiments of the present invention relate to the performance of reconciliation processing of vertices in graph data. The reconciliation processing is intended to reconcile heterogeneity between semantically equivalent vertices in the graph.

The enormous volume of graph data available creates potential for automated or semi-automated analysis that can not only reveal statistical trends but also discover hidden patterns and distil knowledge out of data. Formal semantics plays a key role in automating computation-intensive tasks. While there are varying opinions on how semantics are best captured, it is widely regarded that graphs and graph-like representations are the best instrument to emulate how humans perceive the world (as an ontology with entities and relationships among entities).

Data sets may be generally highly heterogeneous and distributed. The decentralised nature of such data leads to the issue that often many data sources use different references to indicate the same real world object. A necessary and important step towards utilising available graph data effectively is to identify and reconcile multiple references for semantic consistence. Hereinafter, the term "reconciliation" is used to indicate the process of reconciling heterogeneity between vertices (as nodes in a graph of data, for example, as the subject or object of RDF triples) by identifying and defining equivalence links among vertices that correspond semantically to each other. It follows that "reconciliation processing" is the execution of algorithms and instructions by a processor in order to achieve reconciliation. A vertex or group of interconnected vertices represent a resource. The term vertex can be used interchangeably with node or graph node.

The significance of data reconciliation is evident. Data reconciliation ensures data integrity when heterogeneous data sets are linked (resulting in semantic variety in data). Meaningful analysis cannot be performed otherwise. Meanwhile, equivalencies allow applications to align with each other. Communications among the applications can, therefore, be automated and delegated to computers.

Data reconciliation is a challenging research topic in very large databases and large-scale knowledge bases. Hereinafter, knowledge bases are used to refer to data repositories with predefined schemata, e.g. ontologies and relational database schemata.

In existing data reconciliation schemes, the semantics of data items are compared. In practice data semantics are explicated using data names/labels and the names/labels of their properties/attributes. This is subject to naming and modelling convention of data. Data reconciliation is normally based on static information. It is hard for such information to dynamically reflect how data are leveraged in applications.

Embodiments of the present invention include a method for reconciling a source data graph with a target data graph, the source data graph and the target data graph each comprising: a plurality of vertices; and a plurality of interconnections, the plurality of interconnections each connecting two vertices from among the plurality of vertices and representing a relationship between the connected vertices. The method comprises: generating target event propagation information representing the propagation pattern of one or more executions of each of a set of processing events in the target data graph; receiving a request to reconcile the source data graph with the target data graph, and in response to the request, triggering one or more executions of each of the set of processing events in the source data graph; generating source event propagation information representing the propagation pattern of each of the executions of processing events triggered in the source data graph; and using the target event propagation information and the source event propagation information to assess the similarity of pairs of vertices comprising one vertex from each of the source data graph and the target data graph.

Reconciliation of data is a process for reconciling heterogeneity by identifying and producing equivalence links between vertices (which may also be referred to as nodes) which correspond to one another semantically, that is to say, which represent the same resource. For example, where two vertices having different names or labels or being otherwise separate (i.e. being named identically but appearing in disparate graphs or in different sections of the same graph) refer to the same real-world object (i.e. the two vertices are semantically equivalent in meaning), it would be appropriate to add a link to the graph indicating that the two vertices are equivalent. Reconciling data may include identifying where equivalences exist between vertices, and adding an indication of the equivalence to the graph. The identification of multiple representations of the same real world entity is also known as ontology mapping, ontology matching, or ontology alignment.

Reconciling a source data graph with a target data graph includes identifying any vertices in the target data graph which are semantically equivalent to vertices from the source data graph, and adding the source data graph to the target data graph with links indicating said semantic equivalence. The processing required to identify any vertices which are semantically equivalent is a significant performance overhead in data graph systems.

Embodiments provide a mechanism for comparing portions of graph data and specifically for comparing vertices within those portions. Comparisons of vertices form the basis of reconciliation processing, and reconciliation processing can be considered to comprise a series of comparisons between vertices. The mechanism for comparing vertices in embodiments is based on the propagation of events in the graph, which is distinct from existing semantic-based mechanisms. Embodiments utilise the assumption that correlated vertices in different graphs will respond in the same or a similar way to equivalent processing events. That is, that functional semantics based on data utilisation can be used as a basis for comparing vertices. Therefore, by observing the behaviour of vertices in response to processing events it is possible to compare vertices and identify when vertices in the source data graph have equivalent vertices in the target data graph.

In existing reconciliation processes, data reconciliation is based on static information. It is difficult for static information to dynamically reflect how data are leveraged by applications. Embodiments utilise the processing events triggered by applications and the propagation of those events to describe vertices, and by that description to identify where equivalents exist in source and target data graphs. Thus, reconciliation processing which is independent of naming conventions is enabled.

The source data graph is the data which is to be reconciled with the target data graph, and thus may be data which is to be newly-incorporated into the target data graph. Since the target data graph is pre-existing, it is likely that processing events have been executed historically and that information is available from which target event propagation information representing the propagation pattern of executions of processing events can be generated. Thus, methods may or may not include the actual execution of processing events in the target data graph, but at least include generating target event propagation information representing the propagation pattern of executions in the target data graph.

In order to reveal information about the source data graph which may form the basis of comparison with the target data graph, executions of processing events which have historically been carried out in the target data graph, and for which information representing the executions is available, are triggered in the source data graph. The behaviour of the source data graph in response to the triggered execution is observed and a description of that behaviour, for example information representing the propagation pattern, is generated to be used as a basis by which to compare the two data graphs.

A propagation pattern is the vertices in the respective data graph to which the execution of the processing event is propagated. Depending on the implementation, it may be that propagation takes place only along interconnections. Furthermore, it may be that an execution of a processing event is considered to have propagated to another vertex only if a consequential processing event is executed at the another vertex in response to the execution of the processing event. Alternatively, it may be that an execution of a processing event is considered to have propagated to another vertex if the another vertex is notified of the execution of the execution of the processing event, regardless of response. A propagation pattern may also include further information about the propagation, such as details of consequential processing events, and other statistics describing the propagation. A propagation pattern may comprise one or more propagation paths, wherein a propagation path is a series of vertices to which the execution of the processing event propagated, continuously linked by interconnections along which notifications of the execution of the processing event traversed.

By the naming convention used herein a processing event is not a unique occurrence and each processing event may be executed numerous times. An execution of a processing event is a unique occurrence, and refers to a particular instance of processing being carried out. Processing events may be characterised according to, for example, type of data access (single vertex read access, graph traversal read access, vertex status modification, modification of a plurality of vertices, addition of new interconnection, addition of new vertex), identity of originating application, location/class of vertex/vertices accessed by the processing event. Executions of processing events having the same characterisations from the above lists may therefore be considered to be executions of the same processing event. Hence, processing events executed in one data graph may be triggered in another data graph. Thus, "processing event" as a term may be used to represent "processing event type" or "processing event categorisation", and execution of a processing event may be considered to be an instance of a processing event or an occurrence of a processing event.

Each data graph may include processing logic to determine how to respond to processing events. An exemplary form of such processing logic is event handlers. An event handler may be a process or a set of instructions which, when executed by a processor, cause a process to be performed. An event handler being executed may include read or write accesses being made to the data encoding the vertex at which the event handler is executed. The processing may include modifying stored data, and/or considering whether or not to modify data based upon factors which may include characteristics of the processing event giving rise to the execution. Event handlers may be stored as or represented by vertices in the data graph.

Associations between event handlers and vertices may be in the form of registrations or some other explicit link between the event handler and the vertex. For example, an event handler may be stored along with a list of vertices at which it is registered, and the event handler is configured to execute at those vertices to which it is registered. The scope of vertices at which an event handler is registered may be determined by, for example, the data storage server on which the event handler and the vertices are registered. In one implementation, it may be that event handlers are only registered to vertices with which they are co-located in terms of data storage servers. Event handlers may be configured to execute in response to particular types of processing event. For example, a data handler may be provided per data storage server for each of a predetermined set of processing event types.

The event propagation mechanism is configured to respond to a processing event by triggering the execution of one or more event handlers at respective associated vertices. Furthermore, the event propagation mechanism may be configured to respond to the execution of an event handler at a vertex by triggering further executions of event handlers at other vertices. In that way, a single processing event can propagate and cause effects (event handler executions) at vertices other than those modified by the single processing event.

Processing events may be data modification events, including the creation of new vertices and/or modification of existing objects/ranges/values in the stored data. Processing events may include the execution of one of the plurality of event handlers, and/or processing involving read/write requests to particular vertices by entities external to the data graph. Processing events may also include, for example, an access being made to the vertex by an analytics application. A processing event may also be an attempt to read the vertex (or at least part of the data encoding the vertex). For example, in processing for carrying out lazy update of vertices - i.e. only update/refresh the vertex when it is necessary.

The triggering of event handlers at vertices in response to an initial processing event can be represented by a path (a series of interconnections between vertices which received an event notification initiated by the initial processing event; or a series of interconnections between vertices at which event handlers were triggered as a consequence of the initial processing event). The triggering of event handlers in response to a particular initial processing event may be halted, that is to say, the data storage system may preclude any future triggering of event handlers in response to the particular initial processing event, when either there are no further vertices to which to propagate the event, or when a halt is explicitly called by the propagation process itself or alternatively by an system-level event.

The event handler may be configured to be executed in response to a particular category of processing event, for example, a new link creation event. The number of categories and manner in which processing events are categorised is implementation dependent. A category specific event handler is only executed in response to a specified category or categories of processing events. Alternatively or additionally, an event handler may be executable in response to a processing event, and may be configured to determine which instructions/code/process to execute based on categorisation or type of the processing event in response to which it is executed. A single event handler may be executable at more than one vertex. For example, each data storage server may store only one event handler or one event handler per processing event category, with the event handler being executable at any of the vertices stored on the same data storage server.

Furthermore, each data graph may include a propagation mechanism which determines how to propagate the execution of the processing event through the graph. Such a propagation mechanism may be centralised or distributed. An example of a distributed propagation mechanism is the provision of a local event propagation manager for each vertex in the data graph. The local event propagation managers may be provided on a one local event propagation manager per data storage unit basis, so that each local event propagation manager is assigned to each of the vertices stored on the data storage unit for which the local event propagation manager is provided. Alternatively, when necessary, the propagation mechanism can be defined at each vertex.

There may be characteristics of the processing events themselves which determine where in the source data graph the executions should be triggered. Otherwise, it may be that an execution of each of the set of processing events is triggered in the or each central vertex of the source data graph, wherein centrality is determined by a measure such as betweenness.

The comparisons between pairs of vertices are the basis of reconciliation processing, and provide a measure which may be used to assert equivalence links between pairs of vertices, thus reconciling the data graphs. It may be that each vertex of the source data graph is compared with each vertex of the target data graph. On the other hand, some logic or filtering may be applied before such comparisons are performed, in order to reduce the processing burden of the reconciliation processing.

Embodiments may include a step of generating target event propagation information and/or generating source event propagation information comprises obtaining (by observing behaviour in the respective data graph or by reading data representing behaviour and stored in the respective data graph) data identifying each vertex at which a consequential processing event occurred as a consequence of the execution of the processing event.

In a particular implementation, it may be that the propagation pattern of the execution of a processing event is represented by a list or equivalent form of representation of vertices at which further processing events (such as read or write accesses) were performed as a consequence of the execution of the processing event. That is to say, vertices at which, following notification of the execution of a processing event, some processing was carried out including a read or write access to the vertex. It may be that an execution of a processing event can only continue propagating along a path if a processing event was triggered at the current terminal vertex of the path. In such cases, a propagation pattern will comprise interconnected vertices only. Alternatively, it may be that, under certain circumstances, propagation of the execution of the processing event can continue along a path beyond a particular vertex even if no consequential processing event was executed at the particular vertex.

Advantageously, the data identifying each vertex at which a consequential processing event occurred as a consequence of the execution of a processing event provides a per-vertex listing of the processing events to which consequential processing events were performed at the vertex. Such a listing can perform the basis of a full or preliminary comparison between pairs of vertices at little processing cost.

Embodiments may further comprises, for each of the set of processing events: executing the processing event one or more times in each of the target data graph and the source data graph; and for each execution, propagating the execution of the processing event along the plurality of interconnections to vertices of the respective data graph; for each vertex to which the execution of the processing event is propagated, determining whether or not to execute a consequential processing event, and determining whether or not to further propagate the execution of the processing event; and generating source event propagation information and/or generating target event propagation information includes maintaining a record of the or each vertex at which consequential processing events are executed as a consequence of the execution of the processing event.

In the target data graph, the execution of the processing events and the propagation and consequential processing event executions may be processes that have been performed historically at the time at which a request for reconciliation is requested. Therefore, upon receipt of the request for reconciliation, statistics describing those processes are gathered in the form of the generation of target event propagation information. Depending on the format of the target data graph, the data required to generate the target event propagation information may be stored in a distributed manner, for each of the vertices at or in association with the respective vertex. Alternatively, it may be that the data required to generate the target event propagation information are stored centrally, at a database manager or at a centralised event broker. The processing events are data access processes initiated by applications which exploit or manage data stored in the target data graph.

The source data graph, on the other hand, is the portion of graph data which is to be reconciled with the target data graph. The source data graph has not, prior to the request for reconciliation, been accessible as part of the target data graph, or in other words, was an isolated portion of data with respect to the target data graph. Therefore, at the time of the request for reconciliation, it is assumed that no data access processes initiated by applications which exploit or manage data stored in the target data graph have been executed on the data of the source data graph. Therefore, in order that the behaviour of the respective data graphs in response to the same processing events may serve as a base for comparison of the two data graphs, and specifically of pairs of vertices within the two data graphs, the method includes executing the processing events, which have already been executed in the target data graph, in the source data graph. In addition, the method comprises recording and gathering statistics that describe the propagation of the execution of the processing events in the source data graph, from which statistics source event propagation information may be generated.

It is assumed throughout this document that where references are made to comparisons between pairs of vertices, the pair comprises one vertex from each of the target data graph and the source data graph.

Furthermore, throughout this document, generating source event propagation information is taken to be a process of event propagation and recording of processing behaviour associated with the event propagation in the source data (model/graph). Similarly, generating target event propagation information is taken to be a process of event propagation and recording of processing behaviour associated with the event propagation in the target data (model/graph).

Optionally, embodiments may further comprise, for each execution of each of the set of processing events: attributing an event propagation value to the execution of the processing event, (the event propagation value being equal for each execution of the same processing event); and propagating the execution of the processing event along the respective plurality of interconnections includes outputting a notification of the execution of the processing event to the or each neighbouring vertex of the or each vertex accessed by the execution of the processing event, the notification including the event propagation value. Additionally, for each vertex to which the execution of the processing event is propagated: modifying the event propagation value by increasing the event propagation value if it is determined to execute a consequential processing event and decreasing the event propagation value if it is determined not to execute a consequential processing event, and, if the modified event propagation value is above a predetermined threshold value; propagating the execution of the processing event with the modified event propagation value along the or each interconnection connecting to the vertex other than the interconnection connecting to the vertex from which the event notification was received; and generating target event propagation information and/or generating source event propagation information includes, for the or each of a plurality of vertices, maintaining a record of the modified event propagation value for the vertex in association with data identifying the execution of the processing event.

Advantageously, embodiments in which the execution of a processing event is accorded an event propagation value, which can also be considered to be a propagation momentum along a propagation path, provide a further basis for numerical comparison of pairs of vertices. The event propagation value may be equal for each execution of the same processing event upon initiation or generation of the notification. Of course, it is the nature of the propagation mechanism that the notification is replicated and different propagation paths established, and hence a single execution of a processing event will give rise to many instances of an event notification each having event propagation values which may be modified independently of one another.

In an alternative embodiment, instead of propagating the execution of the processing event along the or each interconnection connecting to the vertex (other than the interconnection connecting to the vertex from which the event notification was received), it may be that propagation is only along interconnections incident upon the vertex or directed outward from the vertex. Of course, such embodiments are feasible only if the target data graph and source data graph are directed graphs.

Depending on the precise details of the event propagation mechanism in the data graphs, the value by which the event propagation value is increased or decreased may be a predetermined fixed amount for each vertex in the data graph, or may be a property of the vertex which is configurable either by applications or database administrators, or automatically as a function of the relative number of received notifications that give rise to consequential processing events to those that do not.

The record maintained for each vertex may be maintained centrally, for example by a centralised event propagation manager, or in a distributed manner, for example by local event propagation managers. The record may list the value of the event propagation value of each notification received by the vertex as modified by the vertex, or may group the notifications by processing event (or processing event type or category) and sum the event propagation value for each notification of an execution of that processing event (or that processing event type or category) so that cumulative values are maintained for each processing event (or for each processing event type or category).

Embodiments may also include using the target event propagation information and the source event propagation information to assess the similarity of a pair of vertices comprising one vertex from each of the source data graph and the target data graph includes, determining whether or not consequential processing events were executed at each vertex of the pair of vertices as a consequence of executions of the same processing event, performing further assessment of similarity of the pair of vertices if it is determined that consequential processing events were executed at each vertex of the pair of vertices as a consequence of executions of the same processing event, and excluding the pair of vertices from further assessment of similarity if it is determined that consequential processing events were not executed at each vertex of the pair of vertices as a consequence of executions of the same processing event.

Advantageously, a simple determination of whether or not consequential processing events were executed at each of a pair of vertices (one from each data graph) in response to executions of the same processing event in the different data graphs, can act as a filter to exclude a pair of vertices from further comparison processing. Thus, a filtering effect is achieved and overall processing overheads are reduced. In other words, if a consequential processing event is carried out at each of a pair of vertices in response to executions of the same processing event or of the same type/category of processing event, then that pair of vertices are selected for further comparison processing. Otherwise, the pair is excluded from further comparison processing, and the pair of vertices will not be reconciled with one another.

Further comparison processing may be semantic-based comparison processing by established semantic comparison techniques. Alternatively:

Optionally, the assessment of similarity includes, for each of the pair of vertices, for each of the set of processing events, summing the modified propagation values for the vertex for executions of the processing event, and using the summed modified propagation values per processing event as the basis for a numerical comparison of the two vertices.

The assessment of similarity using the summed modified propagation values is exemplary of the further comparison processing mentioned above. The summed modified propagation values for each of the set of processing events effectively gives a fingerprint of the vertex, which incorporates an indication of the position of the vertex within the respective data graph, and also how the vertex (or its associated event propagation broker or event handlers) responds to particular processing event executions or to particular types/categories of processing event executions. For example, if a vertex in the target data graph is consistently modified in response to new vertices being added to the graph by a particular application, but is not modified in response to new vertices being added to the graph by another application, then this will be reflected by the relative size of the summer modified propagation values for those two processing events. Likewise, if a vertex in the source data graph responds to those processing events in the same or similar way, then a correlation between the summed modification values for the two vertices for those processing events is to be expected. It is these correlations, or the absence thereof, that the numerical comparison of the two vertices seeks to identify.

An exemplary form of numerical comparison is a cosine distance comparison.

Advantageously, the cosine distance comparison is a computationally efficient means to compare vectors of numbers, such as those that can be generated by obtaining the summed modified propagation values for executions of each of the set of processing events for a particular vertex. Furthermore, the cosine distance comparison generates a value that can be normalised across all of the comparisons and assessed against a threshold, wherein exceeding the threshold is an indication that two vertices are equivalent and hence should be reconciled (that is, an equivalence interconnection added between the vertices upon combination of the source data graph and target data graph).

Embodiments may further comprise a step of obtaining a list of processing events executed on the target data graph, identifying the n most frequently executed processing events, and selecting the n identified processing events as the set of processing events.

Advantageously, limiting the set of processing events to the n most frequently executed processing events provides a means by which to reduce the processing overhead imposed by the reconciliation processing. Furthermore, it may be that the reconciliation processing is carried out in an incremental manner, with first the n most frequently executed processing events being used, and then, at a subsequent system idle time, reconciliation processing being carried out with a larger set of processing events. It is assumed in the above that n is a positive integer. The value of n may be predetermined by a database administrator, or may be a condition of the reconciliation request. Alternatively, it may be that n is adaptable according to available system resources, with n being proportional to the amount of available processing resources. The list of processing events executed on the target data graph may be obtained from a system log, or may be derivable by analysing the records maintained by the centralised or local event propagation managers.

Embodiments may include a step of obtaining a time-stamped list of processing events executed on the source data graph, identifying the m most recently executed processing events, and selecting the m identified processing events as the set of processing events.

As an alternative, or in addition, to the n most frequently executed processing events, it may be that the m most recently executed processing events are selected as the set of processing events. Depending on the implementation details, it may be that the usage of the target data graph varies significantly over time, so that processing events which were commonly executed for a period of time are no longer executed very commonly, and hence do not accurately reflect the current status of the graph. Hence, the selection of the m most recently executed processing events provides a useful discriminator for excluding some processing events from analysis. It may be that the selected processing events comprises the n most frequently executed processing events over a certain period of time (i.e. the period of time of length x and ending at or around the time of the reconciliation request, x being a configurable variable) and the m most recently executed processing events. The value of m may be predetermined by a database administrator, or may be a condition of the reconciliation request. Alternatively, it may be that m is adaptable according to available system resources, with n being proportional to the amount of available processing resources. The list of processing events executed on the target data graph may be obtained from a system log, or may be derivable by analysing the records maintained by the centralised or local event propagation managers.

Optionally, in embodiments, executions of processing events are characterised according to one or more properties, and, executions of processing events being characterised in the same way for each of the one or more properties are considered to be executions of the same processing event.

The processing events executed in the target data graph over the course of its normal usage by applications are emulated or replicated in the source data graph as a response to the reconciliation request. A comparison of the behaviour of the respective data graphs to executions of the same processing events serves as a basis for comparison of vertices in the two data graphs and thus enables pairs of equivalent vertices to be identified. The technique for replicating or emulating processing events will depend upon the specific execution environment and format of the data graph. For example, it may be that processing events are executed by a stored set of instructions or other processing logic specific to the processing event being read and run by a processor (that being the execution of the processing event). If so, the replication or emulation in the source data graph may comprise reading and running the same set of instructions or other processing logic as was carried out in the target data graph. In terms of the location at which the replication or emulation is to be executed in the source data graph, it may that some logic can be applied to identifying a location which is similar to that at which it was executed in the target data graph. For example, in a hierarchical data structure, the distance from the top of the hierarchy may be copied. Alternative, distance from a betweenness centre may be used as a basis by which to characterise execution location. Execution location is taken to be the vertices accessed by the execution of the processing event.

Beyond replicated processing logic and execution location, it may be possible to characterise processing events according to properties including: type of access (read/write), whether or not new data items (interconnections/triples/vertices) are generated and their identity/type, identity of the instructing application. A processing event from a library of processing events matching the characteristics of an executed processing event in the set of processing events may be carried out in the source data graph and be considered to be an execution of the processing event.

Reconciliation processing compensates for heterogeneity of data by encoding into the data graphs indications that different data items are semantically equivalent. Optionally, subsequent further actions such as the consolidation of vertices into a single vertex may be performed. As a further option, queries returning a data item may also return equivalents to the data item. The equivalence link may be utilised in a number of ways. The determination of where to add equivalence links is made in dependence upon the outcome of the assessment of similarity of the pairs of vertices.

Optionally, the assessment of the similarity of the pair of vertices generates a confidence value representing a likelihood that the two vertices are semantically equivalent, and, if the generated confidence value exceeds a semantic equivalence threshold, adding an equivalence link denoting an equivalence relationship between the two vertices.

Embodiments of another aspect of the present invention include a controller for a data storage system configured to store a target data graph and being configured to perform reconciliation processing between the target data graph and a source data graph, the source data graph and the target data graph each comprising: a plurality of vertices; and a plurality of interconnections, the plurality of interconnections each connecting two vertices from among the plurality of vertices and representing a relationship between the connected vertices. The controller comprises a target graph event propagation recording module configured to generate target event propagation information representing the propagation pattern of one or more executions of each of a set of processing events in the target data graph; a reconciliation request management module configured to receive a request to reconcile the source data graph with the target data graph; a source graph event propagation execution module configured to, in response to the received request, trigger one or more executions of each of the set of processing events in the source data graph; a graph event propagation recording module configured to generate source event propagation information representing the propagation pattern of each of the executions of processing events triggered in the source data graph; and a vertex pair comparison module configured to use the target event propagation information and the source event propagation information to assess the similarity of pairs of vertices comprising one vertex from each of the source data graph and the target data graph.

The controller could be realised as a centralised controller on a single computing resource, as a centralised controller by a number of computing resources cooperating, or as a controller among a plurality of equivalent controllers each on a respective computing resource in a distributed storage system. For example, it may be that the controller is provided by a program running on a computing resource in the storage system, and that one or more other computing resources are also running equivalent programs so that the database is accessible via a plurality of controllers. The controller may also be referred to as a database controller or a database manager.

Each of the functional modules may be realised by hardware configured specifically for carrying out the functionality of the module. The functional modules may also be realised by instructions or executable program code which, when executed by a computer processing unit, cause the computer processing unit to perform the functionality attributed to the functional module. The computer processing unit may operate in collaboration with one or more of memory, storage, I/O devices, network interfaces, sensors (either via an operating system or otherwise), and other components of a computing device, in order to realise the functionality attributed to the functional module. The modules may also be referred to as units, and may be steps or stages of a method, program, or process.

Embodiments of another aspect of the present invention include a data storage system comprising a distributed network of storage units configured to store a data graph as the target data graph, and a controller embodying the present invention.

Of course, the data storage units are examples of computing resources, and may have processing functionality and control/management functionality in addition to storage.

The storage units may each be computing resources, for example, they may each include a storage unit, in addition to a processor, memory, and/or additional components such as a network interface card, a motherboard, input/output devices.

Embodiments of another aspect of the present invention provide a computer program which, when executed by a computer, causes the computer to perform a method embodying the present invention. Furthermore, embodiments of another aspect of the present invention include a computer program, which, when executed by one or more computers, causes the one or more computers to function as a database controller embodying the present invention. Computer programs embodying the present invention may be stored on a computer-readable storage medium, such as a non-transient storage medium, and may be provided as a single computer program or as a suite of sub-programs.

Though not essential in embodiments of the present invention, implementations may include systems in which the graph is stored in a distributed network of computing resources. The distributed network of computing resources (which computing resources may be storage nodes/units/servers) may include a system of more than one distinct storage units in communication with one another. An exemplary communication paradigm is peer-to-peer (P2P), hence it may be that the distributed network of computing resources is a peer-to-peer network of storage nodes. P2P is a distributed architecture that partitions tasks or workloads between peers. Peers

(individual storage nodes or processes) are equally privileged, equipotent participants in the application. Each peer is configured to make a portion of its resources, such as processing power, disk storage or network bandwidth, directly available to other network participants, without the need for central coordination by servers or stable hosts. Peers can be considered to be both suppliers and consumers of resources, in contrast to a traditional client-server model where servers supply and clients consume. Advantageously, a P2P system can maintain large groups of storage nodes exchanging messages with a logarithmic communication cost.

Depending on the manner in which an embodiment of the present invention is implemented, it may be that reconciliation processing is performed simultaneously on more than one computing resource within the distributed network of computing resources, between the target data and the vertices being stored on that computing resource and belonging to the subset of vertices for which reconciliation processing with the target data is being performed.

Features of the present invention will now be described, purely by way of example, with reference to the accompanying drawing:
Figure 1 is a diagrammatic representation of a method embodying the present invention;
Figure 2 illustrates event propagation in an embodiment; and
Figure 3 illustrates a system architecture of an event propagation mechanism in an embodiment.

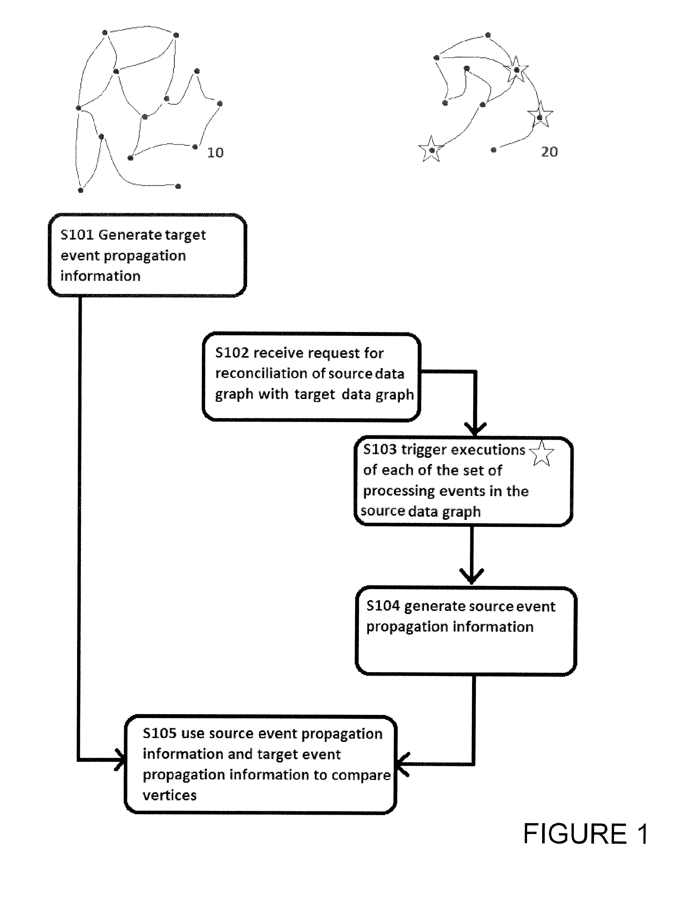

Figure 1 is a diagram illustrating the steps in a procedure. Representations of a target data graph 10 and source data graph 20 are included for illustrative purposes. The geometric representation of a data graph such as that illustrated is only one of many possible ways in which a data graph may be represented. For example, the data graph is encoded with an underlying data structure, such as RDF triples. Furthermore, labels (not illustrated) are attributed to the vertices (dots) and interconnections or edges (lines). The size and geometry of the illustrated data graphs is arbitrary.

The procedural flow of Figure 1 includes five steps S101 to S105. The arrows illustrate a logical progression from one step to the next, so that a step from which an arrow emanates logically leads into the step to which the arrow points. This does not necessarily mean that the step from which the arrow emanates must be complete before the step to which the arrow points can begin, for example, step S103 and step S104 may overlap, in the sense that source even propagation information generation may be ongoing whilst new executions are still being triggered. However, the logical link between the two steps is that the executions must be triggered for source event propagation information to be generated. Furthermore, it can be seen that S101 is independent of the timings of S102 to S104, however there must be some target event propagation information available before step S105, which uses such information, can proceed.

At step S101, target event propagation information is generated. Target event propagation information represents the propagation pattern of one or more executions of each of a set of processing events in the target data graph. The target data graph is a data graph which is in use and into which the source data graph is to be reconciled. Therefore, executions of processing events occur when accesses are made to the target data graph by applications or from other targets. The target data graph is implemented in a manner in which executions of processing events propagate throughout the graph. For example, local event propagation managers may transfer notifications from one to another, and event handlers associated with vertices may execute processing logic. Alternatively, a centralised event broker may be responsible for event propagation and triggering event handlers to execute processing logic. By either technique, data describing the propagation of the execution of a processing event may be maintained, either at the vertices themselves or at a centralised module. Such data may include a list at each vertex of the executions of processing events of which the vertex was notified, or those executions of processing events in response to which consequential processing events were performed at the vertex. Such data may be gathered and used as, or as the basis of, target event propagation information.

The form of the target event propagation information is dependent upon implementation details of the target data graph. As a first example, the target event propagation information may be a list per processing event execution, the list detailing one or both of vertices which were notified of the processing event execution, and vertices at which consequential processing events were performed in response to being notified of the processing event execution. A consequential processing event may be considered to have taken place at a vertex if it makes a read or write access to that vertex.

Data graphs may be implemented with mechanisms for propagating executions of processing events in which a numerical value is applied to the execution and included in notifications of the execution, being modified at each vertex falling on a propagation path. The modification may include increasing the value if a consequential processing event is executed at the vertex in response to receiving the notification, and decreasing the value otherwise. For each vertex, the cumulative numerical values (after modification by the vertex) for each execution of a set of processing events can be stored and used as event propagation information. Alternatively, the numerical value for each execution may be stored per vertex, and then the procedure for generating event propagation information may include grouping each execution into one of the set of processing events and summing the numerical values.

The above discussion of the form of target event propagation information applies similarly to source event propagation information.

At step S102 a request for reconciliation of a source data graph is received. The request may be received at a database manager of the target data graph or at some other entity responsible for maintaining the target data graph. The request may include data encoding the source data graph itself, or may include information detailing the location of the source data graph and enabling the source data graph to be accessed. The request may be in the form of an instruction or command, and may originate from a database administrator or equivalent level. Alternatively, the request may be the consequence of an application level instruction from an application with authority to add a new data graph to the target data graph. We note that reference to the source data graph as a data graph does not imply any particular structural limitations on the source data other than it can be represented as a plurality of vertices interconnected by labelled edges indicating relationships among the vertices. There is no limitation implied by reference to the source data graph as a data graph rather than simply a portion of graph data. Of course, the source data graph is encoded in one way or another by an underlying data format, such as RDF triples.

Once the request for reconciliation is received, steps S103 to S104 are carried out in order to generate event propagation information for the source data graph which can be readily compared with the event propagation information generated for the target data graph.

At step S103, executions of each of a set of processing events executed in the target data graph are triggered in the source data graph. The set of processing events are processing events that have been executed in the target data graph. The set may comprise every processing event that has been executed in the target data graph in a particular period of time, for example, the most recent x seconds. A system log may record executed processing events, and it may be that every processing event listed as having been executed in the system log is included in the set. Alternatively, some logic may be applied, such as selecting the n most frequently executed processing events (overall or over a particular period of time) and/or selecting the m most recently executed processing events, wherein both n and m are positive integers. Each processing event may be embodied as a set of instructions or some other form of processing logic that is run on a processer in order to execute that processing event. Therefore, in order to trigger executions in the source data graph of processing events previously executed in the target data graph, the set of instructions or other processing logic embodying the processing event is modified, or arguments are provided accordingly, so that it accesses the source data graph instead of the target data graph. Once the initial execution of the processing event has been executed in the source data graph, the internal interconnections between vertices in the source data graph and the native event propagation mechanism will determine how the execution of the processing event is propagated.

Depending on the processing event, it may be necessary to select a particular vertex or vertices within the source data graph at which to trigger the execution. It may be that some initial correspondences between the source data graph and the target data graph are known, in which case the execution can be triggered at a vertex which is similar to the vertex at which the processing event was executed in the target data graph. In the absence of any such initial correspondences, each of the set of processing events may be executed at each of the central vertices of the source data graph. The centrality may be calculated based, for example, between-ness to ensure that the events propagate quickly to all of the graph vertices and that no vertices are disproportionately distant from the initial executions. As a further alternative, each of the set of processing events can be executed at each vertex in the source data graph for more accurate results.

At step S104, source event propagation information is generated. Source event propagation information is information representing the propagation pattern of each of the executions of processing events triggered in the source data graph. The above discussion of the form of target event propagation information also applies to source event propagation information. Advantageously, the form of each will be the same, in order to facilitate efficient and meaningful comparison between pairs of vertices comprising one from each of the two data graphs.

At step S105 the generated source event propagation information and the generated target event propagation information are used as a basis by which to compare the two data graphs and establish whether any vertices in the source data graph are equivalent to vertices in the target data graph, along with the identity of any such equivalents. Comparisons are carried out between pairs of vertices comprising one vertex from each data graph. It may be that each vertex in the source data graph is compared with each vertex in the target data graph.

Since comparisons are between vertices, the first stage of the comparison is extracting the information from the source event propagation information relevant to the vertex from the source data graph being compared, and extracting the information from the target event propagation information relevant to the vertex from the target data graph being compared. The extracted information may include a list of the processing event executions which were propagated to the vertex, either in the form of a notification, or in the form of a consequential processing event being executed. Processing event executions may be attributed unique IDs which are included in event notifications used to propagate the event, or recorded by a system log along with data describing the propagation of the execution. The extracted information may also include numerical information such as a cumulative value for each processing event from the set of processing events (each of which may have been executed more than one times in the respective data graph) representing the resistance of the execution of the processing event to having its propagation ended along paths emanating from the vertex in question. Such numerical values may be referred to as event propagation values, and are discussed in more detail below. The comparison may be, for example, determining for each execution of a processing event that was propagated to one of the pair of vertices (meaning either a notification of the processing event was received at the vertex or a consequential processing event was executed at the vertex), whether an execution of the same processing event was propagated to the other of the pair of vertices.

A value representing the agreement between the two may be generated. In a simple technique, the value may be the number of processing events from the set of processing events for which at least one execution was propagated to each vertex in the pair. The value may be as a proportion of the number of processing events in the set, so that it is between 0 and 1. In an alternative technique, the value may quantify the agreement between the proportion of executions of the processing event that were propagated to the vertex in the respective data graph. For example, if every execution of a particular processing event reached both vertices, and no executions of another processing event reached either of the vertices, then the agreement in both cases is good, and hence the value is high.

In either technique, the result is a value quantifying the similarity between the two vertices based on the source event propagation information and the target event propagation information. The value may be compared with a threshold, wherein exceeding the threshold is an indication that the two vertices are semantically equivalent, and hence the target data graph and source data graph are stored with an equivalence link (being an interconnection between the two vertices) indicating the equivalence. The value also quantifies the confidence of the indication of equivalence, so that the threshold may be configured in dependence upon the required level of confidence.

Alternatively, the value generated by either of the above techniques may be used as a means to filter out pairs of vertices for exclusion from further comparison processing. For example, it may be that any pairs of vertices to which no executions of the same processing event were propagated are excluded from further comparison processing. Alternatively, it may be that a threshold for the value generated for the paris by either of the techniques set out above is applied, and those pairs for which the generated value does not exceed the threshold are excluded from further comparison processing. This is to reduce the use of processing resources on pairs of vertices which have only a low chance of being deemed equivalent, in favour of pairs of vertices with a higher chance.

The further comparison processing may utilise the values representing the resistance of the execution of the processing event to having its propagation ended along paths emanating from the vertex in question, summed for each of the set of processing events by adding together said values for each different execution of the same processing event reaching the vertex. Said values may be referred to as event propagation values. For each vertex, a vector of cumulative event propagation values can be assembled, with one value for each member of the set of processing events. The vector forms the basis of a numerical comparison between the vertices which generates a value quantifying the similarity of the vectors. The numerical comparison may be, for example, a cosine distance comparison. The figure generated by the numerical comparison is an indication of confidence in the two vertices being semantically equivalent. Confidence values exceeding a threshold may be taken as an indication that the two vertices are semantically equivalent, and the two data graphs stored with an interconnection between the two vertices indicating equivalence, possibly along with the confidence value.

An exemplary process will now be discussed.

In summary, the exemplary process operates as follows: Let *G^{t}* be the target data model (in the exemplary process the data model is of graph data structure) for which the propagation metadata (exemplary of the target event propagation information mentioned elsewhere in this document) of a list of events (*̅E̅*̅ = 〈e₀, ... eₙ〉) (exemplary of the set of processing events) have been obtained.

Let *G^{s}* be the source data model (in the exemplary process the data model is of graph data structure) that is to be reconciled against *G^{t}.*

〈e₀, ... eₙ〉 that have been processed already in the target data model are issued in the source data model, and the propagation patterns recorded/documented.

The propagation patterns will be used as the basis for computations of the similarity of pairs of vertices comprising one vertex from and thus data reconciliation.

As a precursor to the exemplary process, or as a preparatory phase, it is assumed that the target graph data model *G^{t}* has been subject to balanced use for a certain period of time. Balanced use can be interpreted as use resulting from data queries and update operations arising from accesses being made to the database, rather than from internal self-triggered operations performed for the sake of monitoring behaviour of the data model. It is also assumed that the data operations are performed in an event driven framework to increase dynamism and parallelism. More detail on an exemplary event-driven framework is provided after the description of this exemplary process. In practice, an event can be a read or write operation executed on a data item (vertex). Due to the interconnections of data items, the read/write operation can lead to consequential read/write operations on other data items, so that the executed operation (exemplary of an execution of a processing event) effectively propagates via one or paths across the data model, with the aggregated paths being the propagation pattern of the executed operation. If the data model is of graph data structure, this propagation is normally performed along graph edges (connecting two graph vertices).

The propagation pattern of the executed operation can be recorded either in a distributed manner or in a centralised manner. For example, for distributed storage, an event id and a value referred to as propagation momentum or event propagation value will be stored at each graph vertex. Being stored at each graph vertex means being stored either at a storage location which is deemed to be a part of the vertex, or in a storage location associated with the vertex and assigned to the particular vertex. Propagation momentum is a number quantifying the resistance of the executed operation to its propagation being ended along the propagation path by reaching vertices which do not execute consequential processing operations in response to the propagation and hence subtract an amount from the propagation momentum along that path, the propagation only continuing if the propagation momentum exceeds a predetermined threshold minimum. If stored in a centralised fashion, this can be done as a key-value map with event id as key and a list of vertices as value indicating the scope that the event has reached.

For instance, a new post event or a new claim event (e) being executed at a graph vertex can trigger the consequential events (*e'ᵢ*) at those graph vertices that are monitoring the graph vertex for such an event. This will in turn cause further propagation to those vertices that are monitoring the vertices at which the consequential events (*e'ᵢ*) were executed. In this manner, a propagation pattern per event execution is created.

The rationale is that by explicitly documenting the event propagation patterns, the true semantics of data items (vertices) can be revealed, providing a basis for quantitative comparison. The events may be categorised according to event types (which may include one or more from among post/read/modify/claim) with each event type being replicated one or more times in the source data graph. Event propagation can be either active or passive. The active propagation is realised following the same philosophy of data flow programming where one data item actively "listens" to another data item through registered listeners. An exemplary mechanism for active propagation is set out following the description of this exemplary process. The passive propagation is a technique including observing the processing that is carried out in the data graph irrespective of the mechanism, and documenting whether and where the execution of the event issued at one vertex has caused status change at other vertices.

Events that have been processed on the target data model may be ranked based on the extents of scopes that they have reached. This ranking can be used as a basis by which to select processing events to execute in the source data graph, in circumstances where it is not permitted (or where reconciliation processing is for some other reason limited) to replicate all processing events.

When a source data model is to be reconciled, the events in *E* = 〈*e*₀*, ... eₙ*〉 are used to effectively annotate the data items in the source data model via the steps of executing the events and recording the propagation pattern of each execution. If the availability of system resources are such that the processing of each event in *̅E̅*̅ cannot be performed, an incremental process can be performed, whereby those executed most frequently/recently or having the greatest scope in the target data graph are prioritised. At a subsequent system idle time, the steps of triggering executions in the source data graph, recording the propagation patterns, and comparing pairs of vertices, can be repeated with a more complete version of *̅E̅*̅.

The annotation (the step of generating source event propagation information) is performed by executing the event at a selected set of centre vertices of the source graph (using, for example, the event propagation mechanism set out after the description of this exemplary process).

The number of executions of each processing event in *̅E̅*̅ to trigger in *G^{s},* and the vertices at which the executions should be triggered, can be determined in different ways, for example:-

It may be that some initial correspondences between the source data graph and the target data graph are known, in which case the execution can be triggered at a vertex which is similar to the vertex at which the processing event was executed in the target data graph.

In the absence of any such initial correspondences, each of the set of processing events may be executed at each of the central vertices of *G^{s}.* The centrality may be calculated based on, for example, between-ness to ensure that the events propagate quickly to all of the graph vertices and that no vertices are disproportionately distant from the initial executions.

As a further alternative, each of the set of processing events can be executed at each vertex in *G^{s}* for more accurate results.

Optionally, event propagation can be handled in a distributed manner by initialising the propagation at all of the selected vertices simultaneously. If the source graph is stored in a distributed storage, a true parallel processing can be achieved.

The results of the executions triggered in *G^{s},* that is, the source event propagation information, will be in a form somewhat dependent upon the propagation mechanism in the source data model. In this exemplary process, it is assumed that the propagation mechanism is the network of local event propagation managers described below. The results are stored in a form in which for each vertex *vᵢ* a pair 〈*eⱼ, r*〉 identifying *eⱼ* the processing event from *̅E̅*̅ which was triggered, and *r*, a numeric value indicating the accumulative momentum of the execution of the event as modified by *vᵢ*(the event momentum or event propagation value of each execution of that processing event from the set of processing events). The accumulation can be simply computed as the sum of all the momentum values when *eⱼ* is executed at different central vertices in the source data model.

After propagating multiple event executions, for each vertex *vᵢ*, a vector of event momentum tuples can be obtained as:
〈〈*e*₀*,r*₀〉*,*〈*eᵢ,rᵢ*〉*,...,*〈*eₙ,rₙ*〉〉

This can be used as an event-based semantic feature vectors for data dissimilarity/similarity computation.

When propagation finishes, some or all of the graph vertices in both the source and target graphs are represented by vectors. The element indices of the vectors are events that have been processed on both graphs. The values of the vectors are accumulative quantified momentum values of each event execution when notifications thereof reach or leave the subject vertex (depending on the implementation details). This enables quantification of the confidence level of reconciliation.

In the exemplary process, the comparison step of the reconciliation is performed in stages.

As an initial filtering stage, the respective lists of events recorded as having been propagated to each of a pair of vertices are compared. This stage leverages the assumption that vertices who receive similar events should be considered more similar than those whose received events that are largely discrepant. A threshold number or proportion (of the events in *̅E̅*̅) of common events between the two lists must be identified for the pair to progress to the numerical comparison stage. Otherwise, no further comparison processing is carried out between the pair, and they are deemed not to be equivalent to one another.

Those pairs of vertices that satisfy the threshold number of common events in the initial filtering stage are added to a queue or in some other way marked for progression to a numerical comparison stage. The numerical comparison stage is more detailed and fine-tuned and thus requires more processing resources per pair than the initial filtering stage. The numerical comparison stage is based on the vector of accumulated numeric momentum values recorded for each vertex. Cosine distance, using event weights/momentum values, can be computed to quantify the similarity/dissimilarity between a pair of vertices. In practice, some momentum values below a threshold can be safely ignored as their contribution to the final dissimilarity/similarity computation are not significant.

As a further optional stage, pairs of vertices exceeding a threshold similarity based on the quantification in the numerical comparison stage could be subjected to full semantic comparison using existing semantic matching / alignment algorithms and methods, in order to provide an additional basis for determining whether or not two vertices are equivalent.

Quantifications of similarity calculated in the numerical comparison and/or full semantic comparison can then be compared with a threshold value, which if exceeded, is an indication that the pair of vertices are equivalent, and hence are stored with an interconnection between them indicating that they are considered equivalent. The quantification effectively provides a confidence level in the determination of equivalence, so the confidence level may also be stored in association with the interconnection.

The exemplary process provides opportunities for incremental processing, in order to reduce the upfront processing overhead of reconciliation processing. Possible approaches to incremental reconciliation processing within the framework of the exemplary process are set out below.

It may be that, in an initial reconciliation process, only the most frequently executed events in the target data graph are triggered in the source data graph. This approach stratifies the event list from the target data graph and only initiates the comparison by reinforcing the propagation of the top-ranked events rather than the entire list. This approach is based on the assumption that frequently occurring events are more representative of the semantics of the target data graph. Therefore, they can reveal the semantics more faithfully compared to less frequently occurring ones, thus adding confidence to the reconciliation.

As an alternative or additional approach, particularly useful in target data graphs which are subject to dynamic usage trends, it may be that, in an initial reconciliation process, only the most recently executed events in the target data graph are triggered in the source data graph. This approach restricts the event selection to those most recent ones. Most recent events can more faithfully reflect the dynamics of applications that leveraging the data.

It is possible to acquire interim and approximate results while the event propagation processes are not yet complete. This is effectively taken a snapshot of the event propagation and process reconciliation in the same way as if the propagation successfully terminates. In other words, it is not necessary to wait for event propagation to terminate in the source data graph before performing the comparison processing. A certain time limit after execution may be set to begin comparison processing using the results of the execution, or a finite number of propagation stages be considered.

An exemplary event propagation mechanism will now be set out.

The event propagation mechanism may be a plurality of local event propagation managers, each local event propagation manager being assigned to a vertex. That is to say, the local event propagation mechanism is a local event propagation manager dedicated to each of the vertices on a one local event propagation manager per one vertex basis. Alternatively, local event propagation managers may be provided on a one local event propagation manager per data storage unit basis, so that each local event propagation manager is assigned to each of the vertices stored on the data storage unit for which the local event propagation manager is provided. Alternatively, when necessary, the propagation mechanism can be defined at each vertex.

The local event propagation managers are configured to determine when to execute event handlers, and possibly which event handlers to execute, at the vertex to which they are assigned, in response to a processing event. In addition, the local event propagation managers are configured to determine when to notify neighbouring local event propagation managers (that is to say, the local event propagation manager assigned to vertices connecting to the vertex at which a processing event has occurred) of processing events.

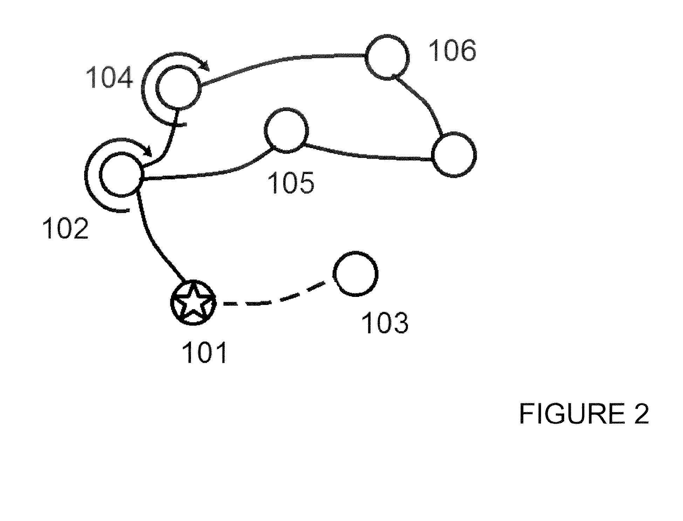

In the example of Figure 2, a processing event occurs at vertex 101. It may be that the local event propagation manager assigned to vertex 101 is configured to respond to the processing event by generating an event notification and/or triggering the execution of an event handler at vertex 101. In addition, the local event propagation manager may be configured to transfer the generated event notification to neighbouring vertices 102 and 103.

There is no response at vertex 103. It may be that no event handlers are associated with vertex 103, or alternatively it may be that the local event propagation manager assigned to vertex 103 receives the event notification and determines that conditions applied to the association between vertex 103 and one or more event handlers are not satisfied, so no executions are triggered. Furthermore, because there are no neighbouring vertices other than the vertex 101 from which the event notification was received, the local event propagation manager assigned to vertex 103 determines that no transmission of the event notification is necessary/possible. It is noted that throughout this document the notion of neighbouring, in terms of vertices and local event propagation managers assigned to vertices, is dictated by interconnections in the graph representation of data, so that any pair of vertices connected by an interconnection are neighbouring, as are their respectively assigned local event propagation managers.

The local event propagation manager assigned to vertex 102 is configured to receive the event notification from the local event propagation manager assigned to vertex 101, at which the processing event occurred, and to determine whether or not to trigger an event handler execution at vertex 102. Such a determination may be dependent upon content of the event notification, for example, the event notification may specify a type/category of processing event and/or the identity or location of the vertex at which the processing event occurred. For example, the local event propagation manager may store conditions applicable to content of the received event notification, and to determine whether or which event handlers to execute in dependence upon which conditions are satisfied. In the example of Figure 1, it is determined by the local event propagation manager assigned to vertex 102 to respond to the received event notification by triggering the execution of an event handler at vertex 102, as denoted by the arrow encircling vertex 102.

The local event propagation manager assigned to vertex 102 is also configured to determine whether or not to transmit the received event notification to neighbouring local event propagation managers other then the local event propagation manager from which the event notification was received. Such a determination may be dependent upon content of the event notification, for example, the event notification may specify a type/category of processing event and/or the identity or location of the vertex at which the processing event occurred. For example, the local event propagation manager may store conditions applicable to content of the received event notification, and to determine whether to transmit the event notification in dependence upon which conditions are satisfied. Furthermore, it may be that the execution of an event handler at vertex 102 results in modifications being made to the event notification prior to transmission. Alternatively or additionally, the execution of the event handler at vertex 102 may result in a new event notification being generated by the local event propagation manager assigned to vertex 102 or by a neighbouring local event propagation manager. In the example of Figure 2, it is determined by the local event propagation manager assigned to vertex 102 to transmit the event notification to the local event propagation managers assigned to vertex 104 and vertex 105.

The local event propagation manager assigned to vertex 105 does not execute an event handler in response to the received event notification. The local event propagation manager assigned to vertex 104 does execute an event handler in response to the received event notification, and transmits the event notification to the local event propagation manager assigned to vertex 106. The local event propagation manager assigned to vertex 105 and the local event propagation manager assigned to vertex 106 both determine not to execute an event handler and not to transmit the event notification to neighbouring local event propagation managers.

Alternatively, it may be that the initial generation is not performed by the local event propagation manager assigned to vertex 101, and that, in fact, the local event propagation manager assigned to vertex 102 is configured to observe neighbouring vertices and to respond to processing events at neighbouring vertices (or specified neighbouring vertices) by generating an event notification and/or triggering the execution of an event handler at vertex 102.

As an alternative to the local event propagation managers, the event propagation mechanism may be a centralised process manager which stores directed links between vertices, the directed links denoting that an event handler is to be executed at one of the linked vertices in response to a processing event at the other of the linked vertices.

The centralised process manager may be a single process manager provided for the entire data graph, or may be assigned to the region/portion of the data graph stored on a particular data storage server. There may be one process manager per data storage server. In the example of Figure 2, it may be that both vertex 102 and vertex 104 are linked to vertex 101 at the process manager. For example, the process manager may be configured to store, for a particular vertex, a register of other vertices at which event handlers are to be triggered in response to a processing event at the particular vertex. In addition, the registration may specify one or more conditions which determine whether or not the event handler is to be executed, and may also specify a particular event handler or category of event handler.

In the example of Figure 2, any conditions stored with the links between vertex 102 and vertex 101 are satisfied, and hence an event handler is executed at vertex 102. Vertex 104 may be included in the register at the process manager for vertex 101, and hence it may be the processing event at vertex 101 that gives rise to the execution of an event handler at vertex 104. Alternatively, the vertex 104 may be included in the register for vertex 102, and the execution of the event handler at vertex 102 satisfies the conditions of the registration, so that an event handler at vertex 104 is executed.

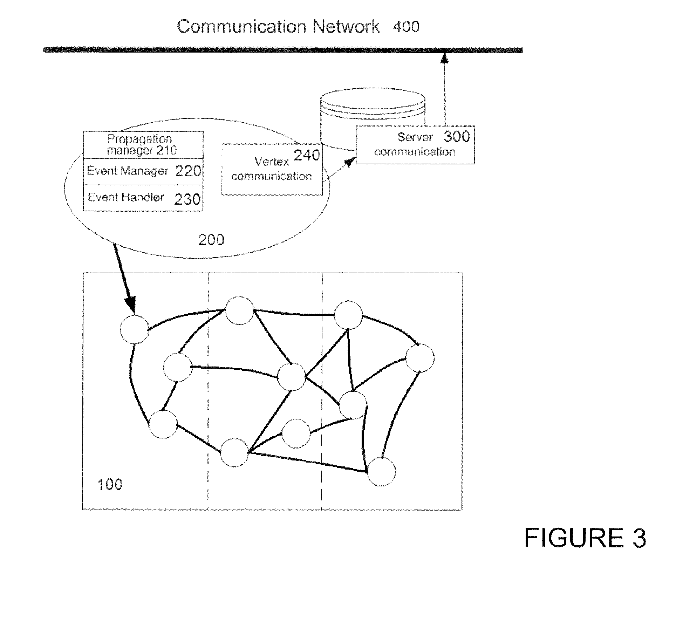

Figure 3 illustrates an embodiment of the present invention, and shows one local event propagation manager 200 in detail. The stored data 100 is shown in its graph representation, wherein the dotted lines illustrate boundaries between regions stored on different data storage servers. A server communication module 300 provides a mechanism for communicating with other entities, such as local event propagation managers, stored on the same data storage server. A communication network 400 provides a mechanism for communicating with entities, such as local event propagation managers, stored on other servers.

The illustrated local event propagation manager 200 is assigned to a particular vertex, as denoted by the arrow between the local event propagation manager 200 and a graph vertex. A local event propagation manager is provided for each of the remaining graph vertices, but these are not illustrated in Figure 3.

The local event propagation manager 200 comprises a propagation manager module 210, an event manager module 220, an event handler 230, and a vertex communication module 240. These functional units are merely an exemplary selection of functional modules configured to carry out the work of local event propagation manager 200. Other distributions of tasks within local event propagation manager 200 are possible, or functionality may simply be performed by the local event propagation manager 200 with no sub division into modules. The event handler 230 is illustrated as a functional component of local event propagation manager 200 in Figure 2. This is an optional arrangement, and the event handler may also be provided at a data storage server level, or be provided as an entity accessible by more than one local event propagation manager. In the example of Figure 2, the event handler 230 is assigned to a particular vertex. As a further option, more than one event handler may be provided per vertex, for example, one event handler per type/category of event.

The vertex communication module 240 is configured to receive an event notification from a neighbouring local event propagation manager, and also to transmit the event notification to neighbouring local event managers. The propagation manager module 210 is configured to determine whether or not to trigger an execution of any of the event handlers associated with the vertex to which the local event propagation manager is assigned, and to determine whether or not to transmit the received event notification to any neighbouring local event propagation managers. The propagation manager module 210 is also responsible for the generation of event notifications, including the attribution and modification of event propagation values. The propagation manager module 210 is configured to maintain the interconnection transmission values attributed to each of the plurality of interconnections that connect the vertex to which the local event propagation manager 200 is assigned to other vertices.

The event manager module 220 is an optional module that is configured to manage event queues and event priorities on behalf of the event handler 230. The event handler is executable in response to an event and may include processes for determining whether or not to modify the vertex at which it is being executed, how to modify said vertex, and for carrying out the determined modifications.

The local event propagation managers may be realised as different processing threads running on the data storage server hosting the vertex to which they are assigned. Alternatively, the local event propagation manager may be realised as one single processing thread per data storage server (or per data storage unit, depending on the particular configuration).

An exemplary process carried out by an exemplary local event propagation manager 200 in a data storage system embodying the present invention will now be set out.

For a graph vertex *v*₀, each of its graph neighbour (*v*₁, ..., *vₙ*) registers its interest on the events occurring at *v*₀. This registration of interest may be explicit and stored as a pointer to *v*₀ at each of its neighbours. Alternatively, the registration of interest may be implicit, and it may be that simply because of the existence of an interconnection from its neighbours to *v*₀, its neighbours are considered to have a registration of interest in *v*₀.

A processing event has an initial momentum (exemplary of the event propagation value mentioned elsewhere in this document) that determines when the event should stop propagating (e.g. when the momentum drops to 0 or below). The initial event momentum is assigned to the processing event by either the local event propagation manager 200 of the vertex at which the processing event occurred, or one of its neighbours. The initial event momentum forms part of the content of the event notification that is transferred between local event propagation managers, and its initial value can be assigned based on factors including:
- Data graph features, e.g. events originated at a high degree vertex should have higher momentum;
- Data features, e.g. events associated with domain data assigned as critical (for example, by a user or database administrator) should have higher momentum; or
- Event type, e.g. system event should have higher momentum than data event.

Such momentum value assessment may be configurable depending on the implementation scenario of the embodiment.

For an arbitrary edge 〈*v*₀,*vᵢ*〉 (an edge is an interconnection between two vertices) where 1 ≤ *i* ≤ *n*, a value is calculated and assigned to the edge, for example, by the local event propagation manager of the vertex that receives event notifications along the edge. The value determines how event momentum is modified following transfer of an event notification between the two vertices along the edge direction from *v*₀ to *vᵢ*. The value is exemplary of the interconnection transmission value mentioned elsewhere in this document.

The interconnection transmission value may be calculated and/or adjusted based on one or more factors which may include:
- *vᵢ*'s interest in a particular event categorisation;
- characteristics of the interconnection between the two vertices;
- *v*₀'s confidence in *vᵢ*; and
- graph properties such as betweeness of an edge: a high betweeness edge may be given a lower interconnection transmission value to allow faster and/or more numerous event propagation (reaching other vertices quicker/less likely to be stopped at the receiving vertex);
- hierarchical edges may be given higher interconnection transmission values than other edges.

If the event successfully reaches *vᵢ*, where *vᵢ* receives the event notification and an event handler is triggered:
- the interconnection transmission value attributed to the edge between *v*₀ and *vᵢ* may be adjusted, for example, decreased;
- the event momentum included in the event notification may be increased when transmitting the event notification from *vᵢ* to its neighbours.

If *vᵢ* rejects the received event notification, that is to say, if the received event notification does not trigger an event handler at *vᵢ*:
- the interconnection transmission value attributed to the edge between *v*₀ and *vᵢ* may be adjusted, for example, increased;
- the event momentum is decreased in the event notification when it is transmitted from *vᵢ* to its neighbours.

Interconnection transmission values may be specific to particular event types/categorisations (e.g. IncomingLinkAddedEvent, IncomingLinkDeletedEvent, etc.), so that one interconnection transmission value is maintained per event type/categorisation per interconnection.

Although the aspects (software/methods/apparatuses) are discussed separately, it should be understood that features and consequences thereof discussed in relation to one aspect are equally applicable to the other aspects. Therefore, where a method feature is discussed, it is taken for granted that the apparatus embodiments include a unit or apparatus configured to perform that feature or provide appropriate functionality, and that programs are configured to cause a computing apparatus on which they are being executed to perform said method feature.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A method for reconciling a source data graph with a target data graph, the source data graph and the target data graph each comprising:
a plurality of vertices; and
a plurality of interconnections, the plurality of interconnections each connecting two vertices from among the plurality of vertices and representing a relationship between the connected vertices;
the method comprising:
generating target event propagation information representing the propagation pattern of one or more executions of each of a set of processing events in the target data graph;
receiving a request to reconcile the source data graph with the target data graph, and in response to the request, triggering one or more executions of each of the set of processing events in the source data graph;
generating source event propagation information representing the propagation pattern of each of the executions of processing events triggered in the source data graph; and
using the target event propagation information and the source event propagation information to assess the similarity of pairs of vertices comprising one vertex from each of the source data graph and the target data graph.

2. A method according to claim 1, wherein
generating target event propagation information and/or generating source event propagation information comprises obtaining, by observing behaviour in the respective data graph or by reading data representing behaviour and stored in the respective data graph, data identifying each vertex at which a consequential processing event occurred as a consequence of the execution of the processing event.

3. A method according to claim 2, wherein
the method further comprises, for each of the set of processing events:
executing the processing event one or more times in each of the target data graph and the source data graph;
for each execution, propagating the execution of the processing event along the plurality of interconnections to vertices of the respective data graph;
for each vertex to which the execution of the processing event is propagated, determining whether or not to execute a consequential processing event, and determining whether or not to further propagate the execution of the processing event; and
generating source event propagation information and/or generating target event propagation information includes maintaining a record of the or each vertex at which consequential processing events are executed as a consequence of the execution of the processing event.

4. A method according to claim 3, wherein
the method further comprises, for each execution of each of the set of processing events:
attributing an event propagation value to the execution of the processing event; and
propagating the execution of the processing event along the respective plurality of interconnections includes outputting a notification of the execution of the processing event to the or each neighbouring vertex of the or each vertex accessed by the execution of the processing event, the notification including the event propagation value;
and, for each vertex to which the execution of the processing event is propagated:
modifying the event propagation value by increasing the event propagation value if it is determined to execute a consequential processing event and decreasing the event propagation value if it is determined not to execute a consequential processing event, and, if the modified event propagation value is above a predetermined threshold value;
propagating the execution of the processing event with the modified event propagation value along the or each interconnection connecting to the vertex other than the interconnection connecting to the vertex from which the event notification was received; and
generating target event propagation information and/or generating source event propagation information includes, for the or each of a plurality of vertices, maintaining a record of the modified event propagation value for the vertex in association with data identifying the execution of the processing event.

5. A method according to claim 2, wherein
using the target event propagation information and the source event propagation information to assess the similarity of a pair of vertices comprising one vertex from each of the source data graph and the target data graph includes, determining whether or not consequential processing events were executed at each vertex of the pair of vertices as a consequence of executions of the same processing event, performing further assessment of similarity of the pair of vertices if it is determined that consequential processing events were executed at each vertex of the pair of vertices as a consequence of executions of the same processing event, and excluding the pair of vertices from further assessment of similarity if it is determined that consequential processing events were not executed at each vertex of the pair of vertices as a consequence of executions of the same processing event.

6. A method according to claim 4 or 5, wherein
the assessment of similarity includes, for each of the pair of vertices, for each of the set of processing events, summing the modified propagation values for the vertex for executions of the processing event, and using the summed modified propagation values per processing event as the basis for a numerical comparison of the two vertices.

7. A method according to claim 6, wherein
the numerical comparison is a cosine distance comparison.

8. A method according to any of the preceding claims, further comprising:
obtaining a list of processing events executed on the target data graph, identifying the n most frequently executed processing events, and selecting the n identified processing events as the set of processing events.

9. A method according to any of the claims 1 to 8, further comprising:
obtaining a time-stamped list of processing events executed on the source data graph, identifying the m most recently executed processing events, and selecting the m identified processing events as the set of processing events.

10. A method according to any of the preceding claims, wherein
executions of processing events are characterised according to one or more properties, and, executions of processing events being **characterised in** the same way for each of the one or more properties are considered to be executions of the same processing event.

11. A method according to any of the preceding claims, wherein
the assessment of the similarity of the pair of vertices generates a confidence value representing a likelihood that the two vertices are semantically equivalent, and, if the generated confidence value exceeds a semantic equivalence threshold, adding an equivalence link denoting an equivalence relationship between the two vertices.

12. A controller for a data storage system configured to store a target data graph and being configured to perform reconciliation processing between the target data graph and a source data graph, the source data graph and the target data graph each comprising:
a plurality of vertices; and
a plurality of interconnections, the plurality of interconnections each connecting two vertices from among the plurality of vertices and representing a relationship between the connected vertices;
the controller comprising:
a target graph event propagation recording module configured to generate target event propagation information representing the propagation pattern of one or more executions of each of a set of processing events in the target data graph;
a reconciliation request management module configured to receive a request to reconcile the source data graph with the target data graph;
a source graph event propagation execution module configured to, in response to the received request, trigger one or more executions of each of the set of processing events in the source data graph;
a graph event propagation recording module configured to generate source event propagation information representing the propagation pattern of each of the executions of processing events triggered in the source data graph; and
a vertex pair comparison module configured to use the target event propagation information and the source event propagation information to assess the similarity of pairs of vertices comprising one vertex from each of the source data graph and the target data graph.

13. A data storage system comprising a distributed network of storage units configured to store a data graph as the target data graph, and a controller according to claim 12.

14. A computer program which, when executed by a computing apparatus, causes the computing apparatus to execute a method according to any of claims 1 to 11.

## Amended claims

### Amended claims in accordance with Rule 137(2) EPC.

1. A method for reconciling a source data graph with a target data graph, the source data graph and the target data graph each comprising:
a plurality of vertices; and
a plurality of interconnections, the plurality of interconnections each connecting two vertices from among the plurality of vertices and representing a relationship between the connected vertices;
the method comprising:
generating target event propagation information representing the propagation pattern of one or more executions of each of a set of processing events in the target data graph;
receiving a request to reconcile the source data graph with the target data graph, and in response to the request, triggering one or more executions of each of the set of processing events in the source data graph;
generating source event propagation information representing the propagation pattern of each of the executions of processing events triggered in the source data graph; and
using the target event propagation information and the source event propagation information to assess the similarity of pairs of vertices comprising one vertex from each of the source data graph and the target data graph by generating a confidence value representing a likelihood that the two vertices in the pair are semantically equivalent, and, if the generated confidence value exceeds a semantic equivalence threshold, adding the source data graph to the target data graph with an equivalence link denoting an equivalence relationship between the two vertices.

2. A method according to claim 1, wherein
generating target event propagation information and/or generating source event propagation information comprises obtaining, by observing behaviour in the respective data graph or by reading data representing behaviour and stored in the respective data graph, data identifying each vertex at which a consequential processing event occurred as a consequence of the execution of the processing event.

3. A method according to claim 2, wherein
the method further comprises, for each of the set of processing events:
executing the processing event one or more times in each of the target data graph and the source data graph;
for each execution, propagating the execution of the processing event along the plurality of interconnections to vertices of the respective data graph;
for each vertex to which the execution of the processing event is propagated, determining whether or not to execute a consequential processing event, and determining whether or not to further propagate the execution of the processing event; and
generating source event propagation information and/or generating target event propagation information includes maintaining a record of the or each vertex at which consequential processing events are executed as a consequence of the execution of the processing event.

4. A method according to claim 3, wherein
the method further comprises, for each execution of each of the set of processing events:
attributing an event propagation value to the execution of the processing event; and
propagating the execution of the processing event along the respective plurality of interconnections includes outputting a notification of the execution of the processing event to the or each neighbouring vertex of the or each vertex accessed by the execution of the processing event, the notification including the event propagation value;
and, for each vertex to which the execution of the processing event is propagated:
modifying the event propagation value by increasing the event propagation value if it is determined to execute a consequential processing event and decreasing the event propagation value if it is determined not to execute a consequential processing event, and, if the modified event propagation value is above a predetermined threshold value;
propagating the execution of the processing event with the modified event propagation value along the or each interconnection connecting to the vertex other than the interconnection connecting to the vertex from which the event notification was received; and
generating target event propagation information and/or generating source event propagation information includes, for the or each of a plurality of vertices, maintaining a record of the modified event propagation value for the vertex in association with data identifying the execution of the processing event.

5. A method according to claim 2, wherein
using the target event propagation information and the source event propagation information to assess the similarity of a pair of vertices comprising one vertex from each of the source data graph and the target data graph includes, determining whether or not consequential processing events were executed at each vertex of the pair of vertices as a consequence of executions of the same processing event, performing further assessment of similarity of the pair of vertices if it is determined that consequential processing events were executed at each vertex of the pair of vertices as a consequence of executions of the same processing event, and excluding the pair of vertices from further assessment of similarity if it is determined that consequential processing events were not executed at each vertex of the pair of vertices as a consequence of executions of the same processing event.

6. A method according to claim 4 or 5, wherein
the assessment of similarity includes, for each of the pair of vertices, for each of the set of processing events, summing the modified propagation values for the vertex for executions of the processing event, and using the summed modified propagation values per processing event as the basis for a numerical comparison of the two vertices.

7. A method according to claim 6, wherein
the numerical comparison is a cosine distance comparison.

8. A method according to any of the preceding claims, further comprising:
obtaining a list of processing events executed on the target data graph, identifying the n most frequently executed processing events, and selecting the n identified processing events as the set of processing events.

9. A method according to any of the claims 1 to 8, further comprising:
obtaining a time-stamped list of processing events executed on the source data graph, identifying the m most recently executed processing events, and selecting the m identified processing events as the set of processing events.

10. A method according to any of the preceding claims, wherein
executions of processing events are characterised according to one or more properties, and, executions of processing events being **characterised in** the same way for each of the one or more properties are considered to be executions of the same processing event.

11. A controller for a data storage system configured to store a target data graph and being configured to perform reconciliation processing between the target data graph and a source data graph, the source data graph and the target data graph each comprising:
a plurality of vertices; and
a plurality of interconnections, the plurality of interconnections each connecting two vertices from among the plurality of vertices and representing a relationship between the connected vertices;
the controller comprising:
a target graph event propagation recording module configured to generate target event propagation information representing the propagation pattern of one or more executions of each of a set of processing events in the target data graph;
a reconciliation request management module configured to receive a request to reconcile the source data graph with the target data graph;
a source graph event propagation execution module configured to, in response to the received request, trigger one or more executions of each of the set of processing events in the source data graph;
a graph event propagation recording module configured to generate source event propagation information representing the propagation pattern of each of the executions of processing events triggered in the source data graph; and
a vertex pair comparison module configured to use the target event propagation information and the source event propagation information to assess the similarity of pairs of vertices comprising one vertex from each of the source data graph and the target data graph by generating a confidence value representing a likelihood that the two vertices in the pair are semantically equivalent; and
if the generated confidence value exceeds a semantic equivalence threshold, the controller is configured to add the source data graph to the target data graph with an equivalence link denoting an equivalence relationship between the two vertices..

12. A data storage system comprising a distributed network of storage units configured to store a data graph as the target data graph, and a controller according to claim 11.

13. A computer program which, when executed by a computing apparatus, causes the computing apparatus to execute a method according to any of claims 1 to 10.
